# DEMANDE DE BREVET EUROPEEN

(11) **EP 3 388 779 A1**
(43) Date de publication de la demande: **17.10.2018**
(21) Numéro de dépôt: 17166026.9
(22) Date de dépôt: 11.04.2017
(51) Int. Cl.: G01B 9/02, G01B 9/04, G02B 21/00

(54) **SYSTEME ET PROCEDE DE METROLOGIE OPTIQUE EN SUPER RESOLUTION A L'ECHELLE NANOMETRIQUE EN CHAMP LOINTAIN**

(71) Demandeur: Université de Strasbourg, 67000 Strasbourg (FR); CENTRE NATIONAL DE LA RECHERCHE SCIENTIFIQUE, 75016 Paris (FR)
(72) Inventeur: MONTGOMERY, Paul, 67550 Vendenheim (FR); LECLER, Sylvain, 67200 Strasbourg (FR); PERRIN, Stéphane, 67100 Strasbourg (FR); LEONG-HOI, Audrey, 67100 Strasbourg (FR)
(74) Mandataire: IPAZ

(57) **Abrégé**

Système de métrologie optique en super résolution pour délivrer des informations sur la topographie de surface d'un échantillon ou objet (6) à l'échelle nanométrique en champ lointain, comprenant une source lumineuse (2), un interféromètre (1a, 1b, 1c, 1d) comprenant un bras de référence intégrant une microbille (9) et un miroir (10), un bras objet intégrant une microbille (7) similaire à ladite microbille (9) et disposée à proximité immédiate de la surface (22) de l'objet (6), des moyens récepteurs (5) pour capter des figures d'interférence, et des moyens pour traiter ces figures d'interférence de façon à produire les informations de topographie de surface.

La source lumineuse (2) est cohérente ou partiellement cohérente temporellement. L'interféromètre et les moyens de traitement des figures d'interférence sont agencés pour reconstruire la surface de l'objet (6) par interférométrie à décalage de phase.

## Description

### Domaine technique

La présente invention concerne un système et un procédé de métrologie optique en super résolution pour délivrer des informations sur la topographie de surface d'un échantillon à l'échelle nanométrique en champ lointain. Elle vise également un procédé de métrologie mis en oeuvre dans ce système.

Ce système et ce procédé visent notamment la profilométrie optique à super résolution. Son intérêt concerne la résolution spatiale nanométrique, au-delà de la limite de diffraction, obtenue dans les trois directions de l'espace.

### Etat de la technique antérieure

Un profilomètre optique est un instrument de métrologie sans contact permettant de reconstruire la topographie de surface d'un objet. Il existe plusieurs techniques de profilométrie optique telles que la microscopie confocale, la projection de lumière structurée et la microscopie interférométrique.

Le principe de l'interférométrie optique est semblable à celui de l'échographie acoustique car elle permet de reconstruire l'information de profondeur d'un objet en mesurant le temps de vol d'une onde réfléchie par une jonction entre deux matériaux de différents indices de cet objet. En d'autres termes, en échographie, l'onde émise par le transducteur est réfléchie par une jonction et est ensuite collectée par un récepteur. La durée entre l'émission et la réception est appelée temps de vol. En faisant le lien entre vitesse, temps et distance, on peut alors retrouver la position relative de la jonction. En interférométrie, c'est la même idée ; c'est-à-dire mesurer le temps de vol. En revanche, la vitesse de la lumière étant nettement supérieure à la vitesse du son, aucun capteur, à l'heure actuelle, n'est capable de mesurer cette durée. Cette technique nécessite donc une configuration plus complexe en ajoutant par exemple un bras de référence. En interférométrie, le signal enregistré par le récepteur (une image d'intensité) est appelé figure d'interférence qui est porteuse d'information de différence de chemin optique. Le récepteur est en général une matrice CCD (de l'anglais *Charge Coupled Device*) ou CMOS (de l'anglais *Complementary Metal Oxide Semiconductor*). En mesurant la différence de chemin optique entre l'onde de référence (qui est réfléchie par un miroir) et l'onde réfléchie par la jonction de l'objet, on peut alors remonter à l'information de hauteur.

Un profilomètre interférométrique utilise donc ce principe pour reconstruire la topographie d'un objet. L'interférométrie regroupe deux principales méthodes de mesure qui reposent sur leur illumination. Aussi, afin de diversifier encore plus ces deux méthodes, il existe de multiples façons d'interpréter les résultats et de reconstruire la topographie.

La première méthode de profilométrie utilise une illumination temporellement cohérente. Elle comprend deux procédés pour reconstruire la topographie qui sont l'holographie numérique et l'interférométrie à décalage de phase.

En holographie numérique (de l'anglais *digital holography*), l'information de profondeur (ou de différence de chemin optique) sur chaque pixel dépend du déphasage entre l'onde de référence et l'onde objet. Le détecteur collecte la figure d'interférences. Puis, par des algorithmes basés sur la propagation des ondes et la transformée de Fourier, on retrouve le déphasage entre l'onde objet et l'onde de référence. La technique a l'avantage de ne nécessiter qu'une seule acquisition. En revanche, contrairement à l'interférométrie à décalage de phase, elle requiert une source cohérente spatialement et un procédé d'algorithme plus complexe.

Dans l'interférométrie à décalage de phase (de l'anglais *phase shifting interferometry*), le déphasage entre l'onde objet et l'onde de référence est calculé à partir d'une série de figures d'interférences décalées en phase, permettant de retrouver la différence de chemin optique sur chaque pixel. Le décalage en phase s'applique en déplaçant axialement, d'une distance connue, l'objet ou le miroir de référence. Cette technique permet une très grande sensibilité axiale, typiquement inférieure à 1 nm.

Ces deux techniques en lumière cohérente de métrologie optique sont actuellement peu utilisées pour la profilométrie optique car dépendantes du bruit de cohérence et des effets de tavelure et de chatoiement (en anglais, *speckle*) induits.

En interférométrie cohérente, la fonction de cohérence est approximée à 1. Donc le terme de différence de chemin optique se retrouve donc dans le terme de phase. En revanche, la deuxième méthode de profilométrie utilise une illumination incohérente ou partiellement incohérente temporellement (c'est-à-dire une source lumineuse polychromatique, par exemple une lampe halogène ou une diode électroluminescente LED). Ici, le principe repose sur le fait que l'interaction entre deux ondes incohérentes ou partiellement incohérentes forme un signal d'interférence porté par un signal que l'on appelle la fonction de cohérence qui porte l'information de différence de chemin optique sur chaque pixel. Mathématiquement, cette fonction de cohérence est exprimée comme une transformée de Fourier du spectre de la source lumineuse. Plus étroit est le spectre (dans le cas d'une source monochromatique), plus large est la fonction de cohérence, et inversement.

Ici, l'information de profondeur ne provient pas du terme de phase mais du terme de cohérence qui lui aussi porte l'information de différence de chemin optique sur chaque pixel. Le détecteur enregistre l'irradiance lumineuse sur chaque pixel qui est la somme des amplitudes des ondes objet et de référence, élevée au carré. En déplaçant axialement l'objet ou le miroir de référence, on obtient un interférogramme sur chaque pixel en fonction de la position de l'objet. Lorsque la différence de chemin optique entre le plan du miroir et la jonction de l'objet est nulle, la valeur de l'enveloppe des franges est maximale sur chaque pixel et un pic d'intensité apparait. En d'autres termes, en balayant la différence de chemin optique suivant l'axe optique, le procédé détecte ce pic de l'enveloppe par pixel puis permet de remonter à l'information de profondeur de l'objet.

Cette technique est appelée interférométrie à lumière blanche ou CSI (de l'anglais *Coherence Scanning Interferometry*). Elle est utilisable aussi bien pour la reconstruction de surface (la topographie) mais aussi de volume (la tomographie). La largeur à mi-hauteur de la fonction de cohérence de la source est appelée longueur de cohérence et est un critère de résolution axiale. Plus grande est la largeur du spectre, meilleure est la résolution axiale. Le procédé permet d'obtenir une sensibilité axiale inférieure à la centaine de nanomètre par pas d'échantillonnage. Des procédés d'interpolations de l'enveloppe améliorent la sensibilité à la dizaine de nanomètres (en utilisant une interpolation mathématique) jusqu'à quelques nanomètres (en utilisant l'interpolation de phase) selon la rugosité de la surface.

Cependant, la résolution latérale d'un profilomètre optique est limitée par la diffraction provenant principalement de l'objectif de microscope.

D'après le critère d'Abbe, la valeur théorique de la résolution en imagerie incohérente est de *λ* / (2*n* sin *α*) où *λ* est la longueur d'onde, *α* est le demi-angle du cône de détection du système optique et *n* l'indice de réfraction du milieu. La valeur de sin *α* étant inférieur à 1, la résolution est donc supérieure à *λ* / (2*n*). Récemment, de nouvelles méthodes expérimentales ont permis de dépasser cette limite en optique en utilisant le principe de l'émission stimulée ou des lentilles à indice de réfraction négatif. En revanche, ces méthodes ne peuvent s'appliquer à l'interférométrie plein champ.

En 2010, Z. Wang et al. (Nature Communications2, 218 (2011)) ont proposé une méthode d'imagerie incohérente permettant l'acquisition d'une image plein-champ en plaçant une microbille de verre sur l'échantillon. Celle-ci projette une image virtuelle et agrandie de l'objet sous la surface de l'échantillon. L'image virtuelle est ensuite collectée par un objectif de microscope. La microbille, transparente à la gamme de longueurs d'onde de la source, collecte les ondes évanescentes et les convertit en onde propagatives. Ainsi, elle peut être en verre, en silice, en polystyrène, en mélanine formaldéhyde, en titanate de baryum (cas en immersion), etc. De plus, selon son diamètre (entre 3 µm et 150 µm) et son contraste d'indice de réfraction (entre 1,2 et 2,0), les performances varient. Le contraste d'indice est défini comme le rapport entre l'indice de réfraction de la microbille et l'indice de réfraction du milieu ambiant. Une résolution latérale de 50 nm a été montrée (Nature Communications2, 218 (2011)). Depuis, le phénomène de super résolution latérale a fait l'objet de nombreux travaux de recherches et de nombreuses publications scientifiques pour l'imagerie 2D.

Ce phénomène s'applique à la résolution latérale, c'est-à-dire à l'imagerie 2D. En plaçant une microbille dans le bras objet d'un interféromètre de Linnik, il a été montré la possibilité de reconstruire en 3D un objet avec une grande résolution axiale et latérale. On peut notamment citer la publication de F. Wang et al. (Scientific Reports6, 24703 (2016)) sur la super résolution appliquée à l'interférométrie en lumière blanche ou CSI. Dans cette publication, la fonction de cohérence est utilisée pour retrouver l'information de profondeur de l'objet. On doit donc utiliser une source lumineuse à faible cohérence temporelle, appelée usuellement sous le terme de source à lumière blanche.

Pour l'utilisation de microbilles en métrologie en super résolution à l'échelle nanométrique, on peut notamment citer les documents CN103823353 « *Sub wavelength super-resolution digital holographie imaging system based on microspheres* », WO2013043818 « *Microsphere superlens based super resolution imaging platform* » ou CN102735878 « *Super resolution microscopic imaging method and system based on micro cantilever and microsphere combined probe ».*

Le but de la présente invention est de proposer un système de profilométrie optique en super résolution, en champ lointain et en illumination cohérente ou partiellement cohérente qui présente de meilleures performances que les procédés actuels précités, tant en termes de résolution axiale qu'en termes de sensibilité de mesure. La technique d'interférométrie à décalage de phase est utilisée pour retrouver la distribution de chemin optique de l'échantillon.

### Exposé de l'invention

Cet objectif est atteint avec un système de métrologie optique en super résolution pour délivrer des informations sur la topographie de surface d'un échantillon ou objet à l'échelle nanométrique en champ lointain, comprenant une source lumineuse cohérente ou partiellement cohérente, un interféromètre comprenant un bras objet intégrant une microbille transparente et disposée à proximité immédiate de la surface de l'objet, un bras de référence intégrant un miroir, des moyens récepteurs pour capter des figures d'interférence, et des moyens pour traiter lesdites figures d'interférence de façon à produire lesdites informations de topographie de surface, ledit interféromètre et lesdits moyens de traitement des figures d'interférence étant agencés pour reconstruire la topographie de l'objet par interférométrie à décalage de phase.

Il est entendu que les microbilles mises en oeuvre dans le système de profilométrie selon l'invention peuvent être de forme sphérique, elliptique, hémisphérique et plus généralement de forme convexe.

La source lumineuse cohérente ou quasi-cohérente temporellement peut présenter une longueur d'onde dans l'infra-rouge, le visible ou le proche ultra-violet.

Dans une première forme de réalisation, l'interféromètre est agencé pour procurer des mesures en configuration réflective et peut être d'un type choisi parmi le groupe des interféromètres de Michelson (1a), de Twyman-Green (1b) et Mirau (1c).

Dans une autre forme de réalisation, l'interféromètre peut être agencé pour procurer des mesures en une configuration transmissive et peut être du type Mach Zehnder (1d).

Dans l'art antérieur, les microbilles sont déposées sur la surface de l'objet. Ceci peut endommager l'objet dans le cas par exemple des échantillons biologiques ou lorsque le matériau de l'objet a un coefficient de dureté plus faible que le matériau de la microbille. En positionnant la microbille à quelques nanomètres de la surface de l'objet, on peut assurer une mesure sans contact. Dans une forme avantageuse de l'invention, la microbille est donc maintenue hors de contact avec la surface de l'échantillon. La microbille est maintenue par un support (par exemple de type pointe mécanique, pince optique ou système de grille percée). Cette microbille peut aussi être maintenue au-dessus de la surface de l'échantillon par un bras micromanipulateur pourvu de moyens pour tenir ladite microbille ou encore par une pince optique. Dans un mode particulier de réalisation d'un système selon l'invention, la microbille est placée dans une micro-grille disposée au-dessus de la surface de l'échantillon et comportant des trous de diamètre sensiblement inférieur à celui de ladite microbille.

Elle peut par exemple être placée dans un milieu gazeux, liquide ou solide et d'indice de réfraction inférieur à celui de ladite microbille, ou dans une couche transparente d'indice de réfraction inférieur à celui de ladite microbille et disposée sur la surface de l'échantillon.

La microbille (de forme sphérique, elliptique, hémisphérique, convexe) peut être avantageusement agencée pour concentrer un faisceau lumineux (que l'on appelle communément le jet photonique) sur l'objet.

Dans un autre mode particulier de réalisation, le bras de référence intègre en outre une microbille similaire à la microbille du bras objet, ladite microbille du bras de référence étant disposée pour compenser la dispersion.

On peut aussi prévoir un agencement des microbilles selon une configuration matricielle translatable permettant de reconstruire un plus grand champ de vue.

Suivant un autre aspect de l'invention, il est proposé un procédé de profilométrie optique en super résolution pour délivrer des informations sur la topographie de surface d'un échantillon à l'échelle nanométrique en champ lointain, mis en oeuvre dans un système de métrologie optique selon l'invention, ledit système intégrant un interféromètre comprenant un bras objet pourvue d'une microbille disposée à proximité immédiate de la surface de l'échantillon et agencé pour procurer des figures d'interférence. Le procédé selon l'invention comprend :
- une illumination de ladite surface via la microbille, par exemple de forme sphérique, elliptique, hémisphérique, convexe, par une source lumineuse cohérente ou quasi-cohérente temporellement avec une longueur d'onde dans le visible ou l'ultra-violet ou l'infrarouge, et
- un traitement desdites figures d'interférence pour reconstruire la surface de l'échantillon par interférométrie à décalage de phase.

Il peut en outre avantageusement comprendre une concentration d'un faisceau lumineux sur l'objet (jet photonique), et être agencé pour procurer des mesures interférométriques en configuration réflective.

Dans une forme particulière de mise en oeuvre du procédé de métrologie optique selon l'invention, le traitement des figures d'interférence comprend :
- Une production, à partir de figures d'interférence, d'un signal brut de la phase mesurée modulo 2π,
- Un découpage dudit signal brut de phase en une zone d'intérêt de l'échantillon de façon à limiter des effets de bord,
- Un dépliement de l'image de phase modulo 2π ainsi obtenue en deux dimensions,
- Un ajustement de ladite image de phase ainsi dépliée, de façon à supprimer des effets d'aberrations,
- Une conversion de ladite image de phase ainsi dépliée puis ajustée, en une distribution de hauteur, et
- Un traitement de ladite distribution de hauteur pour tracer des profils de surface dudit échantillon.

### Description des figures

D'autres avantages et particularités de l'invention apparaîtront à la lecture de la description détaillée de mises en oeuvre et de modes de réalisation nullement limitatifs, et des dessins annexés suivants :
- la figure 1 illustre schématiquement quatre configurations optiques utilisées en réflexion et une configuration optique utilisée en transmission, pour un système de métrologie selon l'invention,
- la figure 2 illustre schématiquement un dispositif de positionnement d'une microbille par rapport à la surface d'un échantillon,
- la figure 3 illustre schématiquement un arrangement matriciel de microbilles (dans ce cas de type hémisphérique), et
- la figure 4 illustre schématiquement une succession d'étapes mises en oeuvre dans le procédé de métrologie optique selon l'invention.

### Modes de réalisation détaillés

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

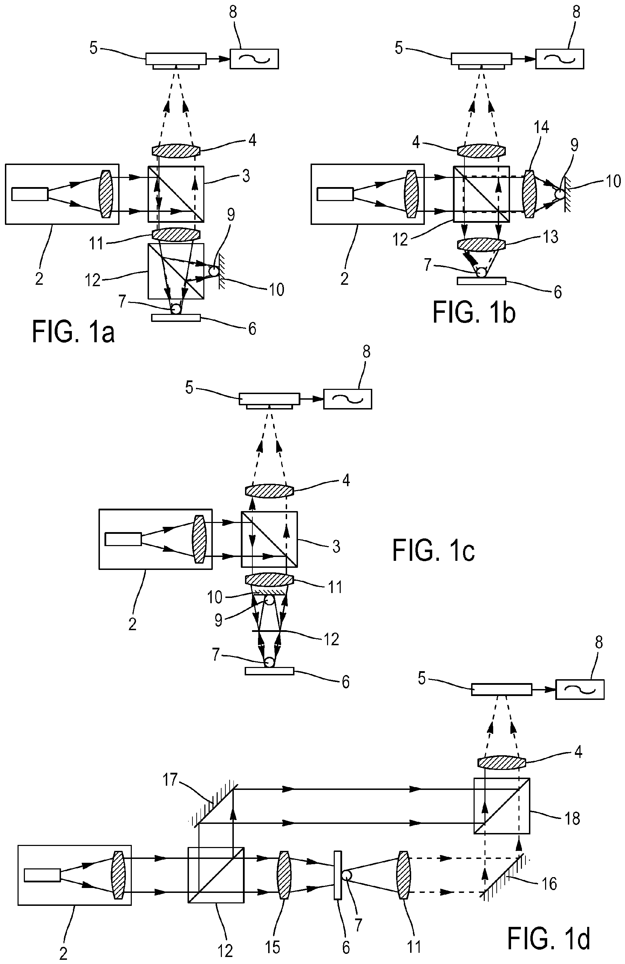

En référence à la figure 1, trois variantes d'un système de métrologie optique fonctionnant en configuration réflective basées respectivement sur un interféromètre de Michelson 1a, un interféromètre de Twyman-Green 1b et un interféromètre de Mirau 1c, et une variante fonctionnant en configuration transmissive basée un interféromètre de Mach Zehnder 1d sont décrites selon l'invention.

Les composants communs à ces quatre variantes de réalisation sont repérés dans la suite avec des références identiques.

La configuration de type Michelson 1a requiert une partie illumination comprenant une source 2 cohérente ou partiellement cohérente temporellement, un collimateur et un séparateur de faisceau 3, et un partie imagerie comprenant l'interféromètre de Michelson, une lentille tube 4, un détecteur 5 et un dispositif 8 de traitement de ces figures d'interférence en vue de générer des profils de surface d'un objet ou échantillon 6.

Un assemblage (non représenté en Figure 1) de lentilles et de diaphragmes permet d'obtenir une illumination de l'objet homogène en intensité. Dans l'interféromètre de Michelson, les bras de référence et objet sont perpendiculaires entre eux. Le faisceau incident sur une lentille convergente ou un assemblage de lentilles 11 est séparé en fractions de faisceau par un séparateur de faisceau 12 et orienté dans le bras de référence et le bras objet. Le bras de référence comprend une microbille ou une matrice de microbilles 9 (de forme sphérique, elliptique, hémisphérique, convexe) et un miroir 10. La microbille est en contact ou non sur le miroir. Le bras objet comprend une microbille ou une matrice de microbilles 7 similaire à ladite microbille du bras de référence, et l'objet ou échantillon 6 à caractériser en mode réflexion.

Le détecteur 5 capte des figures d'interférence produites par l'interférence d'un faisceau objet issu du bras objet et d'un faisceau de référence provenant du bras de référence, et un dispositif 8 traite ces figures d'interférence en vue de générer des profils de surface de l'échantillon 6.

La lentille tube 4 est disposée en sortie du séparateur de faisceau 3 pour faire converger les deux faisceaux de mesure et de référence en interférence vers le détecteur 5, tandis que la seconde lentille 11 est disposée entre le premier dispositif séparateur 3 et le second dispositif séparateur 12 pour faire converger le faisceau d'illumination vers l'objet 6 à mesurer.

L'ouverture numérique de la lentille 11 est en pratique limitée par sa distance de travail et donc est généralement inférieure à 0.3. Avec une microbille de diamètre supérieure à 30 µm, ceci permet donc d'obtenir un grand champ de vue.

La configuration Twyman-Green 1b représentée en Figure 1 est une variante de la configuration Linnik qui est elle-même une amélioration de la configuration Michelson dans la mesure où elle procure une meilleure résolution latérale. Cette architecture requiert une partie illumination comprenant une source 2 cohérente ou partiellement cohérente temporellement pourvue d'un collimateur, et une partie imagerie comprenant un interféromètre de Twyman-Green, une lentille tube 4, un détecteur 5 connecté à une unité de traitement de signal 8 en vue de générer la topographie d'un objet ou échantillon 6. Un assemblage (non représenté en Figure 1) de lentilles et de diaphragmes permet d'obtenir une illumination de l'objet homogène en intensité.

Dans l'interféromètre de Twyman-Green, les bras de référence et objet sont perpendiculaires entre eux et couplés par un séparateur de faisceau 12. Les fractions du faisceau sont incidentes sur deux lentilles convergentes ou deux assemblages de lentilles (une dans chaque bras) 13 et 14. Une partie du faisceau est transmise dans le bras de référence. Le faisceau est alors focalisé par la lentille 14 et la microbille ou une matrice de microbilles 9 (de forme sphérique, elliptique, hémisphérique, convexe) sur le miroir de référence 10 et réfléchi par ce dernier. La microbille 9 est en contact ou non sur le miroir 10. L'onde réfléchie est collectée par la microbille 9 puis la lentille 14. La seconde partie du faisceau est réfléchie par le séparateur 12 puis dirigée dans le bras objet de l'interféromètre. La seconde lentille 13 focalise le faisceau sur la surface de l'objet 6 à caractériser en mode réflexion, via une microbille 7 similaire à la microbille 9 du bras de référence et disposée à proximité immédiate de cet objet. L'onde est alors réfléchie ou diffusée par la surface de l'objet 6 puis collectée via la microbille 7 par la lentille 13. Comme l'onde de référence, l'onde objet est transmise par la lentille tube 4 puis imagée sur le détecteur 5.

Le détecteur 5 capte des figures d'interférence produites par l'interférence d'un faisceau objet issu du bras objet et d'un faisceau de référence provenant du bras de référence, et un dispositif 8 traite ces figures d'interférence en vue de générer des profils de surface de l'échantillon 6.

La lentille tube 4 est disposée en sortie du séparateur 12 pour faire converger les deux faisceaux de mesure et de référence en interférence vers le détecteur 5.

L'ouverture numérique des deux lentilles identiques 13 et 14 n'est en pratique pas limitée par sa distance de travail et donc permet de faire l'acquisition avec une grande résolution latérale. L'architecture de Twyman-Green présente l'intérêt d'un compromis entre résolution latérale et champ de vue.

La configuration Mirau 1c représentée en Figure 1 présente un avantage par rapport aux autres architectures qui est celui d'une réduction de l'encombrement. En effet, le bras de référence est superposé au bras objet et les axes optiques des bras de référence et objet sont alors confondus. Cette architecture requiert une partie illumination comprenant une source 2 cohérente ou partiellement cohérente temporellement pourvue d'un collimateur et un séparateur de faisceau 3, et une partie imagerie comprenant l'interféromètre de Mirau, une lentille tube 4, un détecteur 5 et un dispositif 8 de traitement de ces figures d'interférence. Un assemblage (non représenté en Figure 1) de lentilles et de diaphragmes permet d'obtenir une illumination de l'objet homogène en intensité.

Dans l'interféromètre de Mirau, les bras de référence et objet sont parallèles entre eux. Le faisceau incident sur une lentille convergente ou un assemblage de lentilles 11 est séparé en fractions par un séparateur de faisceau 12 et orienté dans bras de référence et le bras objet. Le bras de référence comprend une microbille ou une matrice de microbilles 9 (de forme sphérique, elliptique, hémisphérique, convexe) et un miroir 10. La microbille est en contact ou non sur le miroir. Le bras objet comprend une microbille ou une matrice de microbilles 7 similaire à la microbille du bras de référence, et l'objet 6 à caractériser en mode réflexion.

Le détecteur 5 capte des figures d'interférence produites par l'interférence d'un faisceau objet issu du bras objet et d'un faisceau de référence provenant du bras de référence, et un dispositif 8 traite ces figures d'interférence en vue de générer des profils de surface de l'échantillon 6.

La lentille tube 4 est disposée en sortie du séparateur de faisceau 3 pour faire converger les deux faisceaux de mesure et de référence en interférence vers le détecteur 5, tandis que la seconde lentille 11 est disposée entre le premier dispositif séparateur 3 et le second dispositif séparateur 12 pour faire converger le faisceau d'illumination vers l'objet 6 à mesurer et le miroir de référence 10.

L'ouverture numérique de la lentille 11 est en pratique limitée par sa distance de travail et donc est généralement inférieure à 0.5. Avec une microbille de diamètre supérieur à 30 µm, ceci permet donc d'obtenir un grand champ de vue.

On va maintenant décrire, en référence à la figure 1, une configuration 1d d'un système de métrologie optique mettant en oeuvre un interféromètre de type Mach Zehnder, adaptée pour des mesures en transmission. Les mesures en transmission sont principalement employées en biologie, car les échantillons sont souvent transparents à la longueur d'onde.

Une mesure en transmission permet de remonter à la différence de chemin optique induit par l'objet traversé. En connaissant l'indice de réfraction de l'objet, on retrouve la hauteur géométrique de l'objet, et vice-et-versa.

Le faisceau lumineux provenant d'une source cohérente ou partiellement cohérente 2 est divisé en deux par un séparateur de faisceau 12. Le faisceau transmis par le séparateur 12, appelé faisceau objet, passe au travers de d'un objet ou échantillon 6, après être éventuellement focalisé par une lentille optionnelle 15 qui est prévue pour concentrer l'énergie de la lumière sur le champ de vue souhaité et donc récolter plus de lumière par la suite.

Une microbille 7 puis une lentille 11 collectent le faisceau diffusé par l'objet 6. Un miroir 16 dirige ce faisceau objet sur un détecteur 5 en passant au travers d'un séparateur de faisceau 18 et une lentille tube ou lentille relais 4.

Le faisceau réfléchi par le séparateur de faisceau 12, appelé faisceau de référence, est dirigé par un miroir 17 vers le séparateur de faisceau 18 où il est de nouveau dirigé sur le détecteur 5 via la lentille tube 4.

Le dispositif 8 de traitement des figures d'interférence permet ensuite de retrouver la distribution latérale (c'est-à-dire suivant X et Y) du chemin optique de l'objet, notamment des informations d'indice de réfraction et de hauteur géométrique.

Il est important de noter que, selon l'invention, dans les systèmes de métrologie optique qui viennent d'être décrits, on peut modifier la polarisation via des polariseurs et des lames à retard, l'uniformité de l'éclairage de l'objet via un système d'éclairage, et les angles des rayons incidents sur l'échantillon.

Les microbilles 7, 9, qui sont mises en oeuvre dans les systèmes 1a, 1b, 1c et 1d de métrologie optique selon l'invention décrits ci-dessus en référence à la figure 1, peuvent être disposées dans l'air ou en immersion dans un matériau transparent de type gazeux, liquide ou solide (par exemple, un polymère comme le polydiméthylsiloxane ou PDMS).

Dans les différents cas qui viennent d'être décrits, la grandeur mesurable dans un système de métrologie optique selon l'invention est une image ou une série d'images en intensité en deux dimensions que l'on appelle plus communément figure d'interférence. Les informations retrouvées sont alors la topographie de surface de l'objet via l'interférométrie à décalage de phase. Cette méthode à décalage de phase est plus rapide que la méthode connue de détection du pic de la fonction de cohérence car elle nécessite moins d'acquisitions, et apporte une meilleure résolution axiale. Quatre images suffisent à reconstruire la topographie de surface de l'objet. Le déphasage calculé entre l'onde de référence et l'onde objet (interprétée comme un retard de l'onde) permet de retrouver les reliefs de surface, c'est-à-dire la topographie, via une formule classique prenant en compte la dispersion de la microbille.

Pour les différents modes de réalisation qui viennent d'être décrits, la source lumineuse 2 doit fournir une grande cohérence. De plus, les simulations numériques ainsi que les mesures expérimentales ont montré que l'utilisation d'une source lumineuse avec une faible longueur d'onde apporte une plus grande résolution latérale. Par exemple, une source de lumière bleue et proche UV apporte une plus grande résolution latérale.

La source lumineuse 2 peut être :
- cohérente, par exemple une source laser avec une longueur de cohérence du mètre,
- quasi-cohérente, par exemple une diode laser avec une longueur de cohérence du centimètre,
- partiellement cohérente, par exemple une diode super-luminescente avec une longueur de cohérence de la centaine de micromètres,
- partiellement incohérente, par exemple une diode électroluminescente avec une longueur de cohérence de la dizaine de micromètres,
- filtrée étroitement en longueurs d'onde, par exemple un super-continuum et un filtre,
- dans tous les cas, de préférence avec une longueur d'onde courte ou avec un spectre centré sur une longueur d'onde courte, dans le vert, le bleu, voire l'ultra-violet, par exemple une LED bleue à 450 nm.

Les performances d'un profilomètre à super résolution selon l'invention dépendent de plusieurs paramètres tels que la combinaison entre la lentille ou l'assemblage de lentilles de collection et la microbille, et la longueur d'onde. Il a été montré qu'un interféromètre de configuration Twyman-Green 1b décrit ci-dessus en référence à la figure 1 et comprenant une source lumineuse à faible longueur d'onde proche et une microbille de verre ayant un diamètre entre 10 µm et 30 µm, permet de résoudre des motifs de 30 nm de taille. L'objectif de microscope 13 placé dans un milieu en immersion doit avoir une ouverture numérique de 0,9.

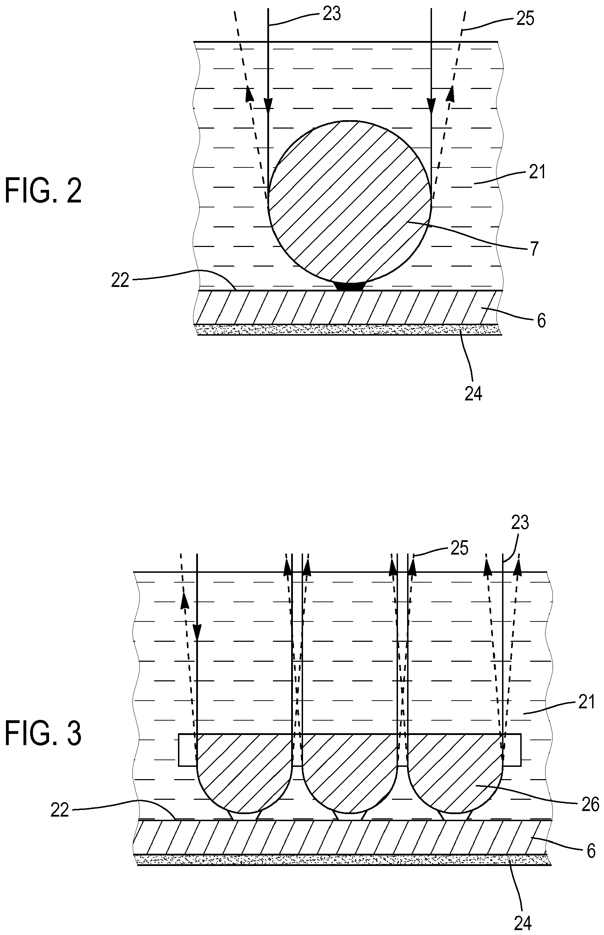

Dans l'exemple de réalisation illustré en figure 2, une microbille 7 prévue pour être disposée dans un faisceau de mesure 23 au sein de l'un des systèmes de métrologie optique représentés en figure 1, est incluse dans une couche d'immersion 21. L'indice de réfraction du milieu constituant la couche 21 est inférieur à celui de la microbille 20. Cette couche d'immersion 21 est disposée sur la surface 22 de l'objet 6 à mesurer, par exemple un substrat, lui-même posé sur un support 24. La microbille 7 collecte ensuite le faisceau réfléchi ou diffusé 25 par la surface 22 de l'objet 6.

Le contraste d'indice à prendre en compte pour l'évaluation des performances d'imagerie est celui entre la microbille 20 et la couche 21. Par exemple, la microbille 20 peut être réalisée en titanate de baryum et incluse dans une couche 21 en PDMS. On peut aussi prévoir que la microbille soit placée dans une micro-grille percée à un diamètre légèrement inférieur à la taille des microbilles afin de les maintenir, ou bien maintenue par un bras micro manipulateur avec une pince ou un autre système d'adhésion, ou encore maintenue par une pince optique.

De plus, une configuration matricielle de microbilles peut être envisagée comme illustré dans la figure 3 où, dans cet exemple, une matrice d'hémisphères 21 est représentée. La matrice d'hémisphères prévue pour être disposée dans un faisceau de mesure 23 au sein de l'un des systèmes de métrologie optique représentés en figure 1, est incluse dans un milieu d'immersion 21. L'indice de réfraction du milieu 21 est inférieur à celui de la microbille 20. Cette couche d'immersion 21 est disposée sur la surface 22 de l'objet 6 à mesurer, par exemple un substrat, lui-même posé sur un support 24. La microbille 7 collecte ensuite le faisceau réfléchi ou diffusé 25 par la surface 22 de l'objet 6.

Cet agencement matriciel de microbilles est particulièrement adapté avec l'utilisation d'une matrice d'interféromètres de Mirau du fait de l'encombrement réduit, et il permet d'augmenter le champ de vue tout en conservant une cadence d'acquisition similaire.

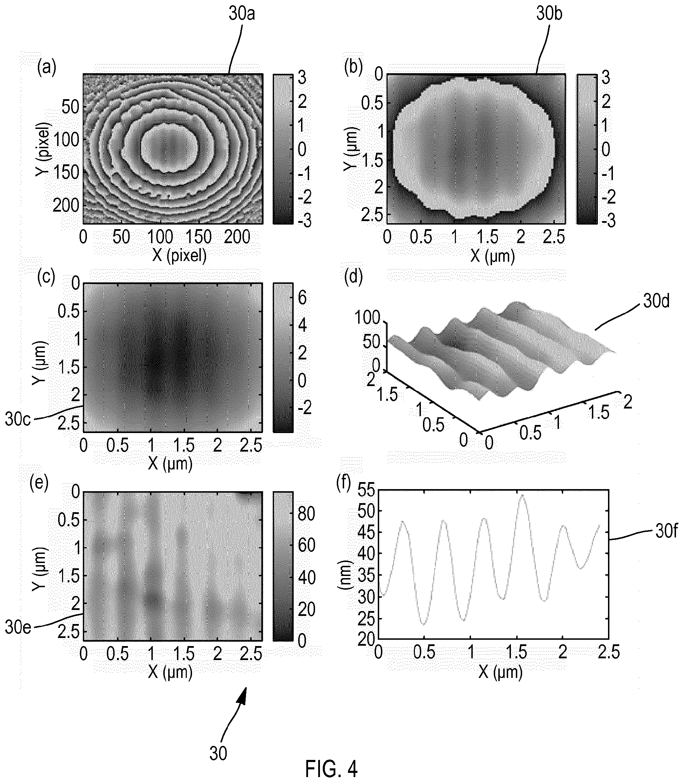

On va maintenant décrire, en référence à la figure 4, un exemple pratique d'un traitement des figures d'interférence obtenues avec le procédé de métrologie optique selon l'invention. Le traitement du signal en interférométrie à décalage de phase requiert le dépliement de phase.

Le signal brut 30a de la phase mesurée modulo 2π est découpé en une zone d'intérêt 30b de l'objet afin de limiter les effets de bords. L'image de phase est ensuite dépliée 30c (de l'anglais *unwrapping*) en deux dimensions puis ajustée 30d (de l'anglais *surface fitting*) afin de supprimer les effets d'aberrations.

Cette image ainsi traitée est ensuite convertie en une distribution de hauteur 30e. Un programme dédié permet alors, à partir de cette distribution de hauteur, de tracer des profils 30f de la surface.

Bien sûr, l'invention n'est pas limitée aux exemples qui viennent d'être décrits et de nombreux aménagements peuvent être apportés à ces exemples sans sortir du cadre de l'invention. Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Système de métrologie optique en super résolution pour délivrer des informations sur la topographie de surface d'un échantillon ou objet (6) à l'échelle nanométrique en champ lointain, comprenant une source lumineuse cohérente ou partiellement cohérente (2), un interféromètre (1a, 1b, 1c, 1d) comprenant un bras objet intégrant une microbille transparente (7) et disposée à proximité immédiate de la surface de l'objet (6), un bras de référence intégrant un miroir (10), des moyens récepteurs (5) pour capter des figures d'interférence, et des moyens (8) pour traiter lesdites figures d'interférence de façon à produire lesdites informations de topographie de surface,
ledit interféromètre (1a, 1b, 1c, 1d) et lesdits moyens (8) de traitement des figures d'interférence étant agencés pour reconstruire la topographie de l'objet (6) par interférométrie à décalage de phase.

2. Système selon la revendication 1, **caractérisé en ce que** la source lumineuse (2) est cohérente ou quasi-cohérente temporellement avec une longueur d'onde dans le visible.

3. Système selon la revendication 1, **caractérisé en ce que** la source lumineuse (2) est cohérente ou quasi-cohérente temporellement avec une longueur d'onde dans l'infrarouge.

4. Système selon la revendication 1, **caractérisé en ce que** la source lumineuse (2) est cohérente ou quasi-cohérente temporellement avec une longueur d'onde dans l'ultra-violet.

5. Système selon l'une des revendications précédentes, **caractérisé en ce que** l'interféromètre est agencé pour procurer des mesures en configuration réflective.

6. Système selon la revendication 5, **caractérisé en ce que** l'interféromètre est d'un type choisi parmi le groupe des interféromètres de Michelson (1a), de Twyman-Green (1b) et Mirau (1c).

7. Système selon l'une quelconque des revendications 1 à 4, **caractérisé en ce que** l'interféromètre est agencé pour procurer des mesures en configuration transmissive.

8. Système selon la revendication 7, **caractérisé en ce que** l'interféromètre est de type Mach Zehnder (1d).

9. Système selon l'une quelconque des revendications précédentes, **caractérisé en ce que** le bras de référence comprend en outre une microbille (9) similaire à la microbille (7) du bras objet, ladite microbille (9) du bras de référence étant disposée pour compenser la dispersion, et disposée à proximité immédiate de la surface du miroir (10).

10. Système selon l'une quelconque des revendications précédentes, **caractérisé en ce qu'**il comporte, dans le bras objet et dans le bras de référence, une pluralité de microbilles agencées sous la forme d'une matrice de microbilles (26) translatable.

11. Système selon l'une quelconque des revendications précédentes, **caractérisé en ce que** la ou les microbille(s) (7, 9, 26) sont de forme sphérique, elliptique, hémisphérique ou convexe.

12. Système selon l'une quelconque des revendications précédentes, **caractérisé en ce que** la ou les microbilles (7, 9, 26) sont placées en contact avec la surface (22) de l'objet (6) ou la surface du miroir de référence (10).

13. Système selon l'une quelconque des revendications 1 à 11, **caractérisé en ce que** la ou les microbilles (26) sont maintenues hors de contact avec la surface (22) de l'objet (6) ou avec la surface du miroir de référence (10).

14. Système selon la revendication 13, **caractérisé en ce que** la ou les microbilles (26) sont placées dans une couche transparente (21) disposée sur la surface (22) de l'objet (6) et d'indice inférieur à celui de ladite ou desdites microbilles (26).

15. Système selon la revendication 13, **caractérisé en ce que** la ou les microbilles sont maintenues au-dessus de la surface de l'objet par un bras micromanipulateur pourvu de moyens pour tenir ladite ou lesdites microbilles.

16. Système selon la revendication 13, **caractérisé en ce que** les microbilles sont maintenues au-dessus de l'objet par une pince optique.

17. Système selon la revendication 13, **caractérisé en ce que** la ou les microbilles sont placées dans une micro-grille disposée au-dessus de la surface de l'objet et comportant des trous de diamètre sensiblement inférieur à celui de ladite ou desdites microbilles.

18. Procédé de métrologie optique en super-résolution pour délivrer des informations sur la topographie de surface d'un objet (6) à l'échelle nanométrique en champ lointain, mis en oeuvre dans un système de métrologie optique selon l'une quelconque des revendications précédentes, ledit système intégrant un interféromètre (1a, 1b, 1c, 1d) comprenant un bras objet pourvu d'une microbille (7) disposée à proximité immédiate de la surface de l'objet (6) et étant agencé pour procurer des figures d'interférence,
ce procédé comprenant :
- une illumination de la surface via ladite microbille (7), par une source lumineuse cohérente ou partiellement cohérente temporellement (2),
- un traitement des figures d'interférence pour reconstruire la surface de l'objet (6) par interférométrie à décalage de phase.

19. Procédé selon la revendication 18, **caractérisé en ce qu'**il procure des mesures interférométriques en configuration réflective.

20. Procédé selon la revendication 18, **caractérisé en ce qu'**il procure des mesures interférométriques en configuration transmissive.

21. Procédé selon l'une des revendications 18 à 20, **caractérisé en ce qu'**il procure des mesures interférométriques en configuration matricielle.

22. Procédé selon l'une quelconque des revendications 18 à 21, **caractérisé en ce que** le traitement (30) des figures d'interférence comprend :
- une production (30a), à partir d'une mesure de phase dans des images de figures d'interférence, d'un signal brut de la phase mesurée modulo 2π,
- un découpage (30b) dudit signal brut de phase en une zone d'intérêt de l'objet (6) de façon à limiter des effets de bord,
- un dépliement (30c) de l'image de phase ainsi obtenue en deux dimensions,
- un ajustement (30d) de ladite image de phase ainsi dépliée, de façon à supprimer des effets d'aberrations,
- une conversion (30e) de ladite image de phase ainsi dépliée puis ajustée, en une distribution de hauteur, et
- un traitement (30f) de ladite distribution de hauteur pour tracer des profils de surface dudit objet (6).

23. Procédé selon l'une quelconque des revendications 18 à 22, **caractérisé en ce que** le traitement (30) des figures d'interférence comprend un algorithme d'optimisation utilisé pour chercher à rapprocher les mesures d'une simulation du résultat décrivant l'interaction bille-objet.
